# FASCICULE DE BREVET EUROPEEN

(11) **EP 1 141 097 B1**
(45) Date de publication et mention de la délivrance du brevet: **08.06.2005**
(21) Numéro de dépôt: 99950895.5
(22) Date de dépôt: 02.11.1999
(51) Int. Cl.: C08J 3/21

(54) **GRANULES REDISPERSABLES DANS L'EAU COMPRENANT UNE MATIERE ACTIVE SOUS FORME LIQUIDE**
IN WASSER REDISPERGIERBARE GRANULATE ENTHALTEND FLÜSSIGE AKTIVE STOFF
WATER RE-DISPERSIBLE GRANULES COMPRISING AN ACTIVE MATTER IN LIQUID FORM

(30) Priorité: 30.10.1998 FR 9813682
(43) Date de publication de la demande: 10.10.2001
(73) Titulaire: RHODIA CHIMIE, 92408 Courbevoie Cédex (FR)
(72) Inventeur: TAISNE, Laurent, F-75018 Paris (FR); HECAEN, Jean-Pierre, 93240 Stains (FR)
(74) Mandataire: Boittiaux, Vincent
(86) Numéro de dépôt international: PCT/FR1999/002667
(87) Numéro de publication internationale: WO 2000/026280

(56) Documents cités:
- WO-A-97/15385
- WO-A-97/15616
- WO-A-97/15617
- US-A- 5 372 804

## Description

La présente invention a pour objet des solides redispersables dans l'eau comprenant une matière active sous forme liquide, leur procédé de préparation et leur utilisation. De préférence, les solides sont des granulés, et plus particulièrement, des objets dont la taille est de quelques millimètres de côté. Cependant l'invention peut couvrir des poudres.

Dans ce qui va suivre, on ne fera référence qu'à des granulés sachant que l'invention n'est pas limitée à cette mise en forme.

Dans certains domaines, comme par exemple ceux de l'alimentaire, de la cosmétique, des peintures ou de l'agrochimie, on est conduit à préparer des formulations à partir de matières actives sous la forme de liquide hydrophobe. L'une des possibilités de formulation est de préparer des émulsions huile dans eau de telles matières.

Cependant, on se trouve en face de problèmes liés à la stabilité au stockage de ces émulsions, tant sur le plan de la stabilité de l'émulsion elle-même (crémage. floculation, mûrissement et coalescence), mais aussi de la stabilité de la matière active (dégradation par hydrolyse par exemple).

Enfin, il n'est pas à négliger le fait que pour être facilement manipulables et pompables, de telles formulations présentent des teneurs relativement peu élevées en matière active et une quantité d'eau importante.

On a donc proposé de mettre en forme de telles émulsions sous la forme de solides, contenant des concentrations élevées en matière active initialement sous forme de liquide hydrophobe.

Ces solides sont obtenus par séchage d'une émulsion comprenant la matière active sous forme de liquide hydrophobe, ainsi qu'un système tensioactif approprié.

Par exemple, un système tensioactif approprié, décrit dans WO97/15385, est constitué par un tensioactif non ionique du type des dérivés polyoxyalkylénés, et un composé hydrosoluble choisi parmi les polyélectrolytes appartenant à la famille des polyacides faibles.

La présente invention a pour objet une amélioration du procédé décrit ci-dessus, dont l'intérêt n'est toutefois pas remis en cause.

Ainsi, la présente invention a pour objet des granulés redispersables dans l'eau, susceptibles d'être obtenus en effectuant les étapes suivantes :
- on prépare une émulsion dans l'eau d'au moins une matière active, d'au moins un tensioactif non ionique, d'au moins un composé hydrosoluble ou hydrodispersable,
- on sèche l'émulsion ainsi obtenue.
Les granulés sont de plus tels que :
Les granulés sont de plus tels que :
- la matière active est sous forme de liquide hydrophobe,
- le tensioactif non ionique es choisi parmi les dérivés polyoxyalkylénés,
- le composé hydrosoluble ou hydrodispersable est :
   (i) au moins un polymère obtenu par polymérisation d'au moins un monomère (I), d'au moins un monomère (III) et éventuellement d'au moins un monomère (II) ou d'au moins un monomère (I) et d'au moins un monomère (II') ; lesdits monomères correspondants aux suivants :
      ∘ (I) : acide monocarboxylique ou polycarboxylique, ou anhydride, aliphatique, cyclique ou aromatique, linéaire ou ramifié, éthyléniquement insaturé,
      ∘ (II) : monomère hydrocarboné, linéaire ou ramifié, éthyléniquement insaturé ;
      ∘ (II') : monomère choisi parmi le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène, le 2-méthyl 3,3-diméthyl 1-pentène ;
      ∘ (III) : ester polyoxyalkyléné d'acide carboxylique éthyléniquement insaturé ;
   (ii) au moins un polymère issu de la polymérisation d'au moins un monomère (I) acide monocarboxylique ou polycarboxylique, ou anhydride, aliphatique, cyclique ou aromatique, linéaire ou ramifié, éthyléniquement insaturé, et comprenant en outre au moins un greffon hydrophobe, hydrocarboné, en C₄-C₃₀, saturé ou non, aromatique ou non, éventuellement interrompu par un ou plusieurs hétéroatomes ;
   (iii) les polypeptides d'origine naturelle ou synthétique, comportant au moins un greffon hydrophobe, hydrocarboné, en C₄-C₃₀, saturé ou non, aromatique ou non, éventuellement interrompu par un ou plusieurs hétéroatomes ;
   (iv) les polysaccharides fortement dépolymérisés comportant au moins un greffon hydrophobe, hydrocarboné, en C₄-C₃₀, saturé ou non, aromatique ou non, éventuellement interrompu par un ou plusieurs hétéroatomes.

Les granulés selon l'invention présentent une meilleure tenue au stockage. En effet, ils sont moins sensibles à l'humidité. En outre, les granulés ont une coulabilité améliorée.

Un autre avantage des granulés selon l'invention est qu'il est toujours aussi aisé, voire plus, de les remettre en dispersion. En effet, les granulés, du fait de leur composition, se redispersent spontanément dans l'eau pour donner des émulsions stables, présentant une granulométrie voisine de celle de l'émulsion initiale.

Bien évidemment, les granulés selon la présente invention sont toujours avantageux en ce sens que les concentrations en matières actives peuvent être très élevées, en comparaison avec les émulsions, ce qui a pour conséquence qu'une plus faible quantité de granulés sera suffisante.

De plus cette mise en forme permet de résoudre le problème de la dégradation de la matière active lorsque celle-ci est sensible à l'hydrolyse.

La présente invention permet aussi de disposer d'une préformulation sous forme de granulés, donc plus facilement utilisable que des émulsions, par exemple dans le cas où ladite préformulation est ajoutée à une formulation en poudre.

Enfin, la présente invention propose une solution aux problèmes de la mise en forme de produits liquides qui sont habituellement formulés par absorption sur un support. Ces formulations sont souvent peu concentrées en matière active et il peut se produire une séparation de phases entre le support et la matière active par migration de la matière active au cours du stockage.

Mais d'autres avantages et caractéristiques apparaîtront plus clairement à la lecture de la description et de l'exemple qui va suivre.

Ainsi que cela a été indiqué auparavant, les granulés selon l'invention comprennent au moins une matière active sous la forme d'un liquide hydrophobe.

Toutes les matières actives conviennent à l'invention dans la mesure où elles se présentent à température ambiante sous forme de liquide non miscible ou très faiblement miscible dans l'eau, ou sous une forme solubilisée dans un solvant organique.

Par faiblement miscible, on entend des matières actives dont la solubilité dans l'eau ne dépasse pas 10 % en poids.

Il est à noter que la présente invention peut tout aussi bien s'appliquer à la mise en forme de matières actives dont le point de fusion est inférieur ou égal à 100°C, plus particulièrement inférieur ou égal à 80°C. En conséquence le terme liquide hydrophobe couvrira aussi, selon l'invention, de telles matières actives.

Par la suite, on entendra par matière active, soit la matière active pure, soit la matière active solubilisée dans un solvant organique, soit un solvant organique.

A titre d'exemple de matières actives dans le domaine de l'alimentaire, on peut citer les mono-, di- et triglycérides, les huiles essentielles, les arômes, les colorants.

A titre d'exemple de matières actives dans le domaine de la cosmétique on peut citer les huiles silicones appartenant par exemple à la famille des diméthicones.

A titre d'exemple de matières actives convenables pour la réalisation de l'invention, dans le domaine des peintures, on peut citer les résines alkydes, les résines époxy, les isocyanates bloqués ou non.

Dans le domaine du papier, on peut citer à titre d'exemple les résines de collage et d'hydrofugation telles que le dimère d'alkylcétène (AKD) ou l'anhydride alcényle succinique (ASA).

Dans le domaine de l'agrochimie, les matières actives phytosanitaires peuvent être choisies parmi la famille des α-cyano-phénoxybenzyl carboxylates ou des α-cyano-halogénophénoxy-carboxylates, la famille des N-méthylcarbonates comprenant des substituants aromatiques, les matières actives telles que Aldrin, Azinphos-methyl, Benfluralin, Bifenthrin, Chlorphoxim, Chlorpyrifos, Fluchloralin, Fluroxypyr, Dichloruos, Malathion, Molinate, Parathion, Permethrin, Profenofos, Propiconazole, Prothiofos, Pyrifenox, Butachlor, Metolachlor, Chlorimephos, Diazinon, Fluazifop-P-butyl, Heptopargil, Mecarbam, Propargite, Prosulfocarb, Bromophos-ethyl, Carbophenothion, Cyhalothrin.

Les matières actives phytosanitaires peuvent être mises en oeuvre en présence d'additifs classiques, choisis par exemple parmi les adjuvants permettant d'augmenter l'efficacité de la matière active, les agents anti-mousses, les agents anti-mottants, des charges, hydrosolubles ou non.

Dans le domaine de la détergence, on peut mentionner en tant que matière active possible les antimousses silicones.

Il est de même possible d'utiliser des matières actives telles que celles entrant dans la composition de lubrifiants pour le travail ou la déformation des matériaux, comme les fluides de coupe, de laminage, de tréfilage, de déformation, de protection. Dans le cas de ces lubrifiants, la matière active peut comprendre des additifs classiques dans le domaine.

La matière active peu ou non miscible dans l'eau est en général une huile, un dérivé d'une huile ou encore un ester d'acide gras.

Les huiles peuvent être choisies parmi les huiles organiques, d'origine animale, ou végétale (colza, tournesol, soja, lin, chanvre, ricin, etc.), ou bien encore des huiles minérales (coupes pétrolières, les huiles naphténiques, paraffiniques, etc.).

Les dérivés d'huiles convenables sont plus particulièrement les produits d'alcoolyse, plus précisément de méthanolyse, de ces huiles.

Parmi les esters d'acide gras, conviennent les esters dont la partie acide dérive d'acides gras comprenant un radical hydrocarboné, linéaire ou ramifié, saturé ou non, en C₇-C₂₂, de préférence en C₁₀-C₂₂, éventuellement porteur d'au moins un groupement hydroxylé, et dont la partie alcool dérive d'alcool comprenant un radical hydrocarboné, linéaire ou ramifié, saturé ou non, en C₁-C₁₀. Les esters méthyliques, éthyliques, propyliques, butyliques peuvent notamment être mis en oeuvre.

De préférence, on met en oeuvre des huiles.

Les matières actives peuvent de plus comprendre des additifs comme des additifs de lubrification, des additifs extrême-pression, des agents anti-corrosion, des biocides, des bactéricides, des agents anti-mousse, des agents de couplage.

Notons que la matière active peut aussi être choisie parmi les solvants organiques ou les mélanges de tels solvants. Dans un tel cas, on met en oeuvre des solvants pas ou peu miscibles dans l'eau au sens indiqué précédemment. Parmi les solvants susceptibles d'être utilisés, on peut citer les solvants comme notamment ceux mis en oeuvre pour le nettoyage ou le décapage, tels que les coupes pétrolières aromatiques, les composés terpéniques comme le D-limonène, ou encore le L-limonène, ainsi que les solvants comme le Solvesso®. Conviennent aussi comme solvants, les esters aliphatiques, comme les esters méthyliques d'un mélange d'acides acétique, succinique et glutarique (mélange d'acides sous-produit de la synthèse du Nylon), les huiles comme l'huile de vaseline, et les solvants chlorés.

Enfin, ainsi que cela a été mentionné aupravant, les matières actives peuvent être mises en oeuvre en présence d'un solvant organique. Plus particulièrement, ce solvant est choisi parmi les produits non solubles ou peu miscibles dans l'eau au sens indiqué auparavant.

Par exemple, on peut mentionner les huiles minérales, les mono- di- et triglycérides d'acides gras saturés ou insaturés ; il peut s'agir aussi de triglycérides de synthèse ou naturels, ainsi que les solvants cités précédemment.

On peut de même employer comme solvant des huiles végétales, comme les huiles de colza, tournesol, arachide, olive, noix, maïs, soja, lin, chanvre, pépins de raisin, coprah, palme, graines de coton, babassu, jojoba, sésame, ricin. Peuvent aussi convenir les esters courts (en C₁-C₄) d'acides gras comprenant 7 à 18 atomes de carbone, les esters d'huiles végétales de pentaérythritol.

Bien évidemment, toutes ces listes ne sont données qu'à titre indicatif et ne sauraient être considérées comme exhaustives.

Les granulés selon l'invention comprennent en outre au moins un tensioactif non ionique choisi parmi les dérivés polyoxyalkylénés.

Plus particulièrement, on peut citer :
- les alcools gras éthoxylés ou éthoxy-propoxylés
- les triglycérides éthoxylés ou éthoxy-propoxylés
- les acides gras éthoxylés ou éthoxy-propoxylés
- les esters de sorbitan éthoxylés ou éthoxy-propoxylés
- les amines grasses éthoxylées ou éthoxy-propoxylées
- les di(phényl-1 éthyl) phénols éthoxylés ou éthoxy-propoxylés
- les tri(phényl-1 éthyl) phénols éthoxylés ou éthoxy-propoxylés
- les alkylphénols éthoxylés ou éthoxy-propoxylés.

Le nombre de motifs oxyéthylène (OE) et/ou oxypropylène (OP) de ces tensioactifs non ioniques varie habituellement de 2 à 100 selon la HLB (balance hydrophilie/lipophilie) souhaitée. Plus particulièrement, le nombre de motifs OE et/ou OP se situe entre 2 et 50. De préférence, le nombre de motifs OE et/ou OP est compris entre 10 et 50.

Les alcools gras éthoxylés ou éthoxy-propoxylés comprennent généralement de 6 à 22 atomes de carbone, les motifs OE et OP étant exclus de ces nombres. De préférence, ces motifs sont des motifs éthoxylés.

Les triglycérides éthoxylés ou éthoxy-propoxylés peuvent être des triglycérides d'origine végétale ou animale (tels que le saindoux, le suif, les huiles d'arachide, de beurre, de graine de coton, de lin, d'olive, de poisson, de palme, de pépin de raisin, de soja, de ricin, de colza, de coprah, de noix de coco) et sont de préférence éthoxylés.

Les acides gras éthoxylés ou éthoxy-propoxylés sont des esters d'acide gras (tels que par exemple l'acide oléïque, l'acide stéarique), et sont de préférence éthoxylés.

Les esters de sorbitan éthoxylés ou éthoxy-propoxylés sont des esters du sorbitol cyclisés d'acide gras comprenant de 10 à 20 atomes de carbone comme l'acide laurique, l'acide stéarique ou l'acide oléïque, et sont de préférence éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylèneglycol.

De même, le terme acide gras éthoxylé inclut aussi bien les produits obtenus par éthoxylation d'un acide gras par l'oxyde d'éthylène que ceux obtenus par transestérification d'un acide gras par un polyéthylèneglycol.

Les amines grasses éthoxylées ou éthoxy-propoxylées ont généralement de 10 à 22 atomes de carbone, les motifs OE et OP étant exclus de ces nombres, et sont de préférence éthoxylées.

Les alkylphénols éthoxylés ou éthoxy-propoxylé ont généralement un ou deux groupes alkyles, linéaires ou ramifiés, ayant 4 à 12 atomes de carbone. A titre d'exemple on peut citer notamment les groupes octyle, nonyle ou dodécyle.

A titre d'exemples de tensioactifs non ioniques du groupe des alkylphénols éthoxy ou éthoxy-propoxylés, des di(phényl-1 éthyl) phénols éthoxylés et des tri(phényl-1 éthyl) phénols éthoxy ou éthoxy-propoxylés, on peut citer notamment le di(phényl-1 éthyl)phénol éthoxylé avec 5 motifs OE, le di(phényl-1 éthyl)phénol éthoxylé avec 10 motifs OE, le tri(phényl-1 éthyl)phénol éthoxylé avec 16 motifs OE, le tri(phényl-1 éthyl)phénol éthoxylé avec 20 motifs OE, le tri(phényl-1 éthyl)phénol éthoxylé avec 25 motifs OE, le tri(phényl-1 éthyl)phénol éthoxylé avec 40 motifs OE, les tri(phényl-1 éthyl)phénols éthoxy-propoxylés avec 25 motifs OE + OP, le nonylphénol éthoxylé avec 2 motifs OE, le nonylphénol éthoxylé avec 4 motifs OE, le nonylphénol éthoxylé avec 6 motifs OE, le nonylphénol éthoxylé avec 9 motifs OE, les nonylphénols éthoxy-propoxylés avec 25 motifs OE + OP, les nonylphénols éthoxy-propoxylés avec 30 motifs OE + OP, les nonylphénols éthoxy-propoxylés avec 40 motifs OE + OP, les nonylphénols éthoxy-propoxylés avec 55 motifs OE + OP, les nonylphénols éthoxy-propoxylés avec 80 motifs OE + OP.

Les granulés redispersables selon l'invention comprennent en outre au moins un composé hydrosoluble ou hydrodispersable choisi parmi une liste de quatre types de composés.

Ainsi que cela a été indiqué auparavant, une première variante de l'invention consiste à mettre en oeuvre en tant que composé hydrosoluble ou hydrodispersable, au moins un polymère issu de la polymérisation d'au moins un monomère (I), d'au moins un monomère (III) et éventuellement d'au moins un monomère (II) ; lesdits monomères correspondants aux suivants :
∘ (I) : acide monocarboxylique ou polycarboxylique, ou anhydride, aliphatique, cyclique ou aromatique, linéaire ou ramifié, éthyléniquement insaturé,
∘ (II) : monomère hydrocarboné, linéaire ou ramifié, éthyléniquement insaturé ;
∘ (III) : ester polyoxyalkyléné d'acide carboxylique éthyléniquement insaturé.

Le monomère (I) correspond plus particulièrement à la formule suivante :

(R¹)(R¹) - C = C(R¹) - COOH (I)

formule dans laquelle les radicaux R¹, identiques ou différents, représentent un atome d'hydrogène, un radical hydrocarboné en C₁ - C₁₀ comprenant éventuellement un groupement - COOH, un groupement - COOH.

Selon un mode de réalisation préféré de l'invention le monomère de formule (I) est un acide monocarboxylique ou polycarboxylique, un anhydride carboxylique correspondant à la formule suivante :

(R¹¹)HC = C (R¹²) COOH

formule dans laquelle :
R¹¹, représente un atome d'hydrogène, un groupement -COOH ou un groupement - (CH₂)ₙ - COOH dans lequel n est compris entre 1 et 4, un radical alkyle en C₁-C₄ ;
R¹² représente un atome d'hydrogène, en groupement -(CH₂)ₘ - COOH dans lequel m est compris entre 1 et 4, un radical alkyle en C₁-C₄.

De préférence, R¹¹ représente un atome d'hydrogène, un groupement -COOH ou (CH₂)-COOH, un radical méthyle, et R¹², il représente un atome d'hydrogène, un groupement -CH₂ COOH ou un radical méthyle.

Selon un mode de réalisation plus particulier, le monomère de formule (I) est choisi parmi les acides ou anhydrides acrylique, méthacrylique, citraconique maléique, fumarique, itaconique, crotonique.

En ce qui concerne le monomère de formule (II), ce dernier correspond plus spécialement à la formule suivante :

(R²)(R²) - C = CH₂ (II)

formule dans laquelle les radicaux R², identiques ou différents, représentent un atome d'hydrogène, un radical saturé ou éthyléniquement insaturé, aliphatique linéaire ou ramifié, ou cyclique, en C₁ - C₁₀.

Plus particulièrement, lesdits radicaux R², identiques ou différents, représentent un atome d'hydrogène, un radical saturé, aliphatique linéaire ou ramifié, ou cyclique, en C₁ - C₁₀.

De préférence, ledit monomère de formule (II) est choisi parmi l'éthylène, le propylène, le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène (ou 2,4,4-triméthyl 1-pentène), le 2-méthyl 3,3-diméthyl 1-pentène.

Quant au monomère (III), il correspond plus particulièrement à la formule suivante :

CH₂=C(R³)-C(O)-O-[CH₂CH(R⁴)O]ₘ-[CH(R⁵)-CH₂O]ₙ-R⁶

formule dans laquelle :
R³ est un atome d'hydrogène ou un radical méthyle,
R⁴ et R⁵ identiques ou différents, représentent un atome d'hydrogène ou un radical alkyle contenant de 1 à 4 atomes de carbone,
R⁶ est un radical alkyle, aryle, alkylaryle ou arylalkyle contenant de 1 à 30, de préférence de 8 à 30 atomes de carbone,
n est compris entre 2 et 100, de préférence entre 6 et 100
m est compris entre 0 et 50,
sous réserve que n soit supérieur ou égal à m et leur somme comprise entre 2 et 100, de préférence entre 6 et 100.

De préférence, on utilise des monomères de formule (III) pour lesquels R⁶ est un radical alkyle contenant de 8 à 30 atomes de carbone, ou un radical phényle substitué par un à trois groupements 1-phényléthyle, ou un radical alkylphényle dont le radical alkyle contient de 8 à 16 atomes de carbone.

Parmi les monomères de ce type, susceptibles d'être mis en oeuvre, on peut citer ceux décrits dans les brevets EP 705 854, US 4 138 381 ou encore US 4 384 096.

Le polymère obtenu par réaction des monomères (I) et (III), et éventuellement (II) est de préférence obtenu par polymérisation radicalaire.

Selon un second mode de réalisation, le polymère (i) est obtenu par polymérisation d'au moins un monomère (I) et d'au moins un monomère (II').

Ce qui a été indiqué auparavant au sujet du monomère (I) reste valable et ne sera donc pas repris dans cette partie de la description.

Le monomère de formule (II') est choisi parmi le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène (ou 2,4,4-triméthyl 1-pentène), le 2-méthyl 3,3-diméthyl 1-pentène.

Selon un mode de réalisation particulièrement avantageux de la présente invention, le copolymère de formule (i) est issu de la polymérisation de l'anhydride maléique et du diisobutylène.

Il est précisé que le polymère (i) est obtenu plus particulièrement en effectuant une polymérisation radicalaire des monomères (I) et (II').

Notons que ces composés sont bien connus de l'homme de l'art. A titre de copolymères de ce type, on peut citer celui commercialisé sous la dénomination Geropon® T36 (anhydride maléique/diisobutylène) commercialisé par Rhodia Chimie, ainsi que le Sokalan® CP9 (anhydride maléique/oléfine) commercialisé par BASF.

A titre d'indication, et quel que soit le mode de réalisation mis en oeuvre pour le polymère (i), la masse moléculaire en poids de ces polymères est plus particulièrement inférieure à 20000 g/mole.

Il est précisé que la masse moléculaire du polymère ainsi que les proportions respectives des monomères (I), (II), (II') et (III), selon leur présence, sont telles que le polymère résultant ne précipite pas lorsqu'il est en solution aqueuse avec le tensioactif non ionique ; la concentration en polymère étant comprise entre 0 exclu et 90 % en poids, de préférence entre 30 et 80 % en poids.

Enfin, il est fait remarquer que le polymère (i) peut se trouver sous une forme partiellement ou totalement neutralisée. Cette opération a lieu de préférence après la polymérisation.

Une deuxième variante de la présente invention est constituée par l'utilisation, en tant que composé hydrosoluble ou hydrodispersable, d'au moins un polymère issu de la polymérisation d'au moins un monomère de formule (I) telle que définie précédemment et comportant, en outre, au moins un greffon hydrophobe hydrocarboné en C₄ - C₃₀, saturé ou non, aromatique ou non, éventuellement interrompu par un ou plusieurs hétéroatomes.

Tout ce qui a été indiqué auparavant à propos du monomère de formule (I) reste applicable dans le cas du polymère (ii) et ne sera donc pas repris ici.

Plus particulièrement, le monomère (I) est choisi parmi les acides ou les anhydrides acrylique, méthacrylique, citraconique maléique, fumarique, itaconique, crotonique.

Par ailleurs, le greffon hydrophobe est choisi parmi les radicaux aliphatiques, cycliques, aromatiques, alkylaromatiques, arylaliphatiques comprenant 4 à 30 atomes de carbone, et pouvant être interrompus par un ou plusieurs hétéroatomes, de préférence l'oxygène.

Plus particulièrement, les greffons sont reliés au squelette du polymère par l'intermédiaire de groupements ester et/ou amide.

De tels polymères greffés sont obtenus en mettant en oeuvre des méthodes connues de l'homme de l'art consistant dans un premier temps à faire polymériser, de préférence par voie radicalaire le ou les monomères (I), puis à faire réagir une partie des fonctions carboxyliques libres, avec des réactifs choisis notamment parmi les alcools ou les amines hexylique, heptylique, laurylique, béhénique. éventuellement éthoxylés et/ou propoxylés, les mono-, di- ou tristyrylphénols éventuellement éthoxylés et/ou propoxylés.

A titre indicatif, la masse moléculaire en poids des polymères (ii) est plus particulièrement inférieure à 20000 g/mole.

Cependant, la masse moléculaire ainsi que les proportions respectives de monomère(s) (I) et de greffons hydrophobes est telle que le polymère résultant ne précipite pas lorsqu'il est en solution aqueuse avec le tensioactif non ionique ; la concentration en polymère étant comprise entre 0 exclu et 90 % en poids, de préférence entre 30 et 80 % en poids.

Les polymères (ii) peuvent aussi se trouver sous une forme partiellement ou totalement neutralisée. Cette opération a lieu de préférence après la polymérisation.

Les polymères (i) et (ii) peuvent en outre comprendre des motifs correspondant à des monomères non-ioniques monoéthyléniquement insaturés (IV) autres que les monomères (II) et (II').

Parmi les monomères non-ioniques monoéthyléniquement insaturés (IV), on peut citer :
∘ les monomères vinylaromatiques comme le styrène, le vinyltoluène,
∘ les C₁-C₂₀ alkylesters d'acides α-β éthyléniquement insaturés comme les acrylates ou méthacrylates de méthyle, éthyle, butyle,
∘ les esters de vinyle ou d'allyle d'acides α-β éthyléniquement insaturés comme les acétates ou propionates de vinyle ou d'allyle,
∘ les halogénures de vinyle ou de vinylidène comme le chlorure de vinyle ou de vinylidène,
∘ les nitriles α-β éthyléniquement insaturés comme l'acrylonitrile,
∘ les hydroxyalkylesters d'acides α-β éthyléniquement insaturés comme les acrylates ou méthacrylates d'hydroxyéthyle ou d'hydroxypropyle,
∘ les amides α-β éthyléniquement insaturés comme l'acrylamide, le méthacrylamide.

Si de tels monomères sont présents, la polymérisation a lieu en leur présence.

Une troisième variante de la présente invention, consiste à employer en tant que composé hydrosoluble ou hydrodispersable, au moins un polypeptide d'origine naturelle ou synthétique, comportant au moins un greffon hydrophobe, hydrocarboné, en C₄-C₃₀ saturé ou non, aromatique ou non, éventuellement interrompu par un ou plusieurs hétéroatomes.

Les polymères peptidiques d'origine naturelle ou synthétique sont des homopolymères ou copolymères dérivés de la polycondensation d'acides aminés, notamment de l'acide aspartique et glutamique ou des précurseurs des diaminodiacides, et hydrolyse. Ces polymères peuvent être aussi bien des homopolymères dérivés de l'acide aspartique ou glutamique, que des copolymères dérivés de l'acide aspartique et de l'acide glutamique en proportions quelconques, ou des copolymères dérivés de l'acide aspartique et/ou glutamique et d'aminoacides d'autres. Parmi les aminoacides copolymérisables, on peut entre autres, citer la glycine, l'alanine, la leucine, l'isoleucine, la phényl alanine, la méthionine, l'histidine, la proline, la lysine, la sérine, la thréonine, la cystéine...

Parmi les polypeptides d'origine naturelle, on peut mentionner les protéines d'origine végétale ou animale, hydrosolubles ou hydrodispersables. Les protéines d'origine végétales sont de préférence des hydrolysats de protéines. Leur degré d'hydrolyse est plus particulièrement inférieur à 40 %.

Parmi les protéines d'origine végétale, on peut citer à titre indicatif, les protéines provenant des graines protéagineuses, notamment celles de pois, féverole, lupin, haricot et lentille ; les protéines provenant de grains de céréales notamment celles de blé, orge, seigle, maïs, riz, avoine, millet ; les protéines provenant de graines oléagineuses notamment celles du soja, arachide, tournesol, colza et noix de coco ; les protéines provenant de feuilles notamment luzerne et ortie ; les protéines provenant d'organes végétaux et réserves enterrées notamment celles de pomme de terre, betterave.

Parmi les protéines d'origine animale, on peut citer par exemple, les protéines musculaires, notamment les protéines du stroma, la gélatine ; les protéines provenant du lait, notamment caséine, lactoglobuline ; et les protéines de poissons.

Les protéines d'origine végétale et plus particulièrement les protéines provenant du soja et du blé sont préférées.

Ce qui a été indiqué auparavant à propos de la nature du greffon hydrophobe reste valable et en sera pas repris ici.

Il est à noter que les greffons hydrophobes peuvent être liés au polypeptide par l'intermédiaire de liaisons amide, ester, urée, uréthanne, isocyanate, amino.

Les polymères greffés sont obtenus par réaction d'une partie des fonctions amines ou acides libres, avec des composés permettant de créer les liaisons précitées.

Les composés préférés présentent un degré de polymérisation faible. Plus particulièrement, à titre d'illustration, la masse moléculaire en poids est inférieure à 20000 g/mole.

Il est précisé que la masse moléculaire du polymère, ainsi que la proportion de greffon par rapport au polypeptide, sont telles que le polymère résultant ne précipite pas lorsqu'il est en solution aqueuse avec le tensioactif non ionique ; la concentration en polymère étant comprise entre 0 exclu et 90 % en poids, de préférence entre 30 et 80 % en poids.

Selon une dernière variante de la présente invention, le composé hydrosoluble ou hydrodispersable est choisi parmi les polysaccharides fortement dépolymérisés comportant un greffon hydrophobe hydrocarboné, en C₄ - C₃₀, saturé ou non, aromatique ou non, éventuellement interrompu par un ou plusieurs hétéroatomes.

De tels composés sont notamment décrits dans l'ouvrage de P. ARNAUD intitulé "cours de chimie organique", GAUTHIER-VILLARS éditeurs. 1987.

A titre d'exemple non limitatif de polysaccharides fortement dépolymérisés, on peut citer ceux obtenus à partir du dextran, d'amidon, de maltodextrine, de gomme xanthane et de galactomannanes tels que le guar ou la caroube.

Ces polysaccharides présentent de préférence un point de fusion supérieur à 100°C et une solubilité dans l'eau comprise entre 50 et 500 g/l.

Au sujet des greffons hydrophobes, on pourra se référer à ce qui a été indiqué auparavant.

Il est à noter que les greffons hydrophobes peuvent être liés au polysaccharide par l'intermédiaire de liaisons ester, amide, urée, uréthanne, isocyanate, amino.

Les polymères greffés sont obtenus par réaction d'une partie des fonctions alcools ou acides libres, avec des composés permettant de créer les liaisons précitées.

Plus particulièrement, à titre d'illustration, la masse moléculaire en poids de ces polymères est inférieure à 20000 g/mole.

Cependant, il est précisé que la masse moléculaire du polymère dépolymérisé, ainsi que la proportion de greffon par rapport au polysaccharide sont telles que le polymère résultant ne précipite pas lorsqu'il est en solution aqueuse avec le tensioactif non ionique ; la concentration en polymère étant comprise entre 0 exclu et 90 % en poids de préférence entre 30 et 80 % en poids.

Bien entendu, il est tout à fait envisageable d'utiliser ces différents types de composés hydrosolubles ou hydrodispersables en combinaison.

Les granulés redispersables de la présente invention peuvent contenir en outre un tensioactif supplémentaire ionique.

Les tensioactifs supplémentaires ioniques peuvent plus particulièrement être des agents tensioactifs amphotères, les alkyl-bétaïnes, les alkyldiméthylbétaïnes, les alkylamidopropylbétaines, les alkylamido-propyldiméthylbétaïnes, les alkyltriméthyl-sulfobétaïnes, les dérivés d'imidazoline tels que les alkylamphoacétates, alkylamphodiacétates, alkylampho-propionates, alkyl-amphodipropionates, les alkylsultaïnes ou les alkylamidopropyl-hydroxysultaïnes, les produits de condensation d'acides gras et d'hydrolysats de protéines, les dérivés amphotères des alkylpolyamines comme l'Amphionic XL® commercialisé par Rhodia, Ampholac 7T/X® et Ampholac 7C/X® commercialisés par Berol Nobel.

Les granulés selon l'invention peuvent en outre comprendre au moins un tensio-actif supplémentaire anionique.

On peut utiliser à ce titre des sels hydrosolubles d'alkylsulfates, d'alkyléthersulfates, les alkyliséthionates et les alkyltaurates ou leurs sels, les alkylcarboxylates, les alkylsulfosuccinates ou les alkylsuccinamates, les alkylsarcosinates, les dérivés alkylés d'hydrolysats de protéines, les acylaspartates, les phosphates esters d'alkyle et/ou d'alkyléther et/ou d'alkylaryléther.

Le cation est en général un métal alcalin ou alcalino-terreux, tels que le sodium, le potassium, le lithium, le magnésium, ou un groupement ammonium NR₄⁺ avec R, identiques ou différents, représentant un radical alkyle substitué ou non par un atome d'oxygène ou d'azote.

Il est possible d'ajouter aux granulés redispersables selon l'invention, tout additif classique selon le domaine d'application de ces derniers.

Comme cela a été indiqué auparavant, les granulés redispersables selon l'invention, présentent des teneurs élevées en matière active.

Ainsi, la teneur en matière active est comprise, de manière avantageuse, entre 40 et 90 parties en poids dans le granulé. Selon un mode de réalisation particulier de l'invention, la teneur en matière active est supérieure à 50 parties en poids.

La quantité de tensioactif non ionique et de composé hydrosoluble ou hydrodispersable varie plus particulièrement entre 10 et 60 parties en poids dans le granulé.

Le rapport pondéral des concentrations entre le tensioactif non ionique et le composé hydrosoluble ou hydrodispersable, peut varier dans un large domaine. Cependant selon un mode de réalisation particulièrement avantageux de l'invention, le rapport pondéral des concentrations est compris entre 50 / 50 et 90 / 10.

Dans le cas où les granulés redispersables de l'invention comprennent au moins un tensioactif supplémentaire, le rapport pondéral des concentrations entre le tensioactif non ionique et le tensioactif supplémentaire, est compris entre 5 et 10.

Le procédé de préparation des granulés redispersables va maintenant être décrit.

Comme indiqué précédemment, le procédé consiste dans une première étape à préparer une émulsion dans l'eau, d'au moins une matière active, d'au moins un tensioactif non ionique, d'au moins un composé hydrosoluble ou hydrodispersable.

L'émulsion peut aussi comprendre au moins un tensioactif supplémentaire, si un tel composé est employé.

Bien évidemment, dans le cas où des additifs classiques sont utilisés, on peut les ajouter lors de la formation de l'émulsion.

Toutes les méthodes de préparation d'émulsions connues de l'homme du métier et décrites, par exemple, dans "ENCYCLOPEDIA of EMULSIONS TECHNOLOGY", volumes 1 à 3 de Paul BECHER édités par MARCEL DEKKER INC., 1983, peuvent être mises en oeuvre dans le cadre de la présente invention.

Ainsi, la méthode dite d'émulsification en phase directe convient à la préparation des granulés selon l'invention. Il est rappelé brièvement que cette méthode consiste à préparer un mélange contenant l'eau et le ou les tensioactifs, y compris le composé hydrosoluble ou hydrodispersable, puis à introduire la matière active sous forme liquide, sous agitation.

Une autre méthode convenable est l'émulsification par inversion de phases. Selon cette voie, on mélange la matière active avec un tensioactif non ionique et on introduit goutte à goutte et sous agitation, l'eau pouvant contenir les autres constituants tels que le composé hydrosoluble ou hydrodispersable par exemple. A partir d'une certaine quantité d'eau introduite, il se produit une inversion de l'émulsion. On obtient alors une émulsion directe huile dans eau. On dilue ensuite l'émulsion obtenue dans l'eau de manière à obtenir une fraction volumique en phase dispersée appropriée.

On peut enfin préparer l'émulsion en mettant en oeuvre des broyeurs colloïdaux tels que MENTON GAULIN et MICROFLUIDIZER (MICROFLUIDICS).

La granulométrie moyenne de l'émulsion est en général comprise entre 0,1 et 10 micromètres et préférentiellement entre 0,2 et 5 micromètres.

L'émulsification peut être réalisée à une température voisine de la température ambiante, bien que des températures plus faibles ou plus élevées soient envisageables.

La quantité de matière sèche de l'émulsion est généralement comprise entre 10 et 99 % en poids et préférentiellement entre 30 et 80% en poids.

Les teneurs respectives de divers constituants sont choisies de telle sorte que les granulés séchés présentent la composition définie auparavant.

La seconde étape du procédé de préparation selon l'invention consiste à sécher l'émulsion ainsi formulée pour obtenir des granulés.

La méthode mise en oeuvre pour éliminer l'eau de l'émulsion et obtenir des granulés, peut être effectuée par tout moyen connu de l'homme du métier.

Ainsi, selon un premier mode de réalisation de l'invention, on peut envisager un séchage en étuve. De préférence, ce séchage a lieu en couche mince.

Habituellement, la température de séchage est inférieure ou égale à 100°C. Plus particulièrement, des températures comprises entre 50 et 90°C conviennent à la mise en oeuvre de cette méthode.

Selon un autre mode de réalisation particulier de l'invention, on met en oeuvre une méthode de séchage dite rapide, de l'émulsion.

Conviennent à ce titre le séchage par atomisation, ou mettant en oeuvre des tambours Duprat®, la lyophilisation (congélation-sublimation).

Ces modes de séchage, comme notamment le séchage par atomisation, sont particulièrement indiqués car ils permettent de conserver ; émulsion en l'état et d'obtenir directement des granulés.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence compris entre 100 et 115°C et la température de sortie est de préférence comprise entre 55 et 65°C. Ces températures sont données à titre indicatif, et dépendent de la stabilité thermique des divers éléments.

Dans le cas d'opérations de séchage de l'émulsion réalisées au moyen de tambour Duprat®, ou de tout moyen permettant d'obtenir rapidement un film sec qui est séparé du support séchant par une opération de raclage par exemple, on obtient des particules que l'on peut éventuellement broyer. Si nécessaire, ces particules peuvent faire l'objet d'une mise en oeuvre ultérieure, comme une étape d'agglomération, de manière à obtenir des granulés.

Il est à noter que des additifs, tels que les agents antimottants peuvent être incorporés aux granulés au moment de cette seconde étape de séchage.

On recommande, à titre d'exemple, d'utiliser une charge choisie notamment parmi le carbonate de calcium, le sulfate de baryum, le kaolin, la silice, la bentonite, l'oxyde de titane, le talc, l'alumine hydratée et le sulfoaluminate de calcium.

Un exemple concret mais non limitatif va maintenant être présenté.

### EXEMPLE

Dans 56 g d'une solution aqueuse de Géropon® T 36 (à 26,3 %), on ajoute, sous agitation au moyen d'une pâle cadre (250 tours/minute), 3,2 g de Soprophor® CY8 (tristyrylphénol éthoxylé 25 OE), 0,5 g de Na₂CO₃.

Une fois un mélange homogène obtenu, on ajoute 18,5 g de Métolachlor.

On agite, ensuite le mélange pendant 2 minutes, au moyen de la pâle cadre (1000 tours/minute).

A l'issue de cette opération, on obtient une émulsion qui est séchée à 70°C en couche mince pendant une durée suffisante pour obtenir un film sec.

Le film est alors broyé pour donner des particules qui sont ensuite tamisées de manière à obtenir la granulométrie désirée.

Les particules contiennent 50,1 % de métolachlor.

Les particules se redispersent spontanément et se transforment en émulsion, lorsqu'elles sont mises en contact avec l'eau.

### EXEMPLE COMPARATIF

Dans 56 g d'une solution aqueuse de Géropon® HB (polyacrylate de sodium à 26,3 %), on ajoute, sous agitation au moyen d'une pâle cadre (250 tours/minute), 3,2 g de Soprophor® CY8 (tristyrylphénol éthoxylé 25 OE), 0,5 g de Na₂CO₃.

Une fois un mélange homogène obtenu, on ajoute 18,5 g de Métolachlor.

On agite, ensuite le mélange pendant 2 minutes, au moyen de la pâle cadre (1000 tours/minute).

A l'issue de cette opération, on obtient une émulsion très instable qui coalesce rapidement et se sépare en deux phases.

Cette émulsion est impossible à sécher en couche mince d'une façon homogène.

## Revendications

1. Granulés redispersables dans l'eau **caractérisés en ce qu'**ils sont susceptibles d'être obtenus en effectuant les étapes suivantes :
- on prépare une émulsion dans l'eau d'au moins une matière active, d'au moins un tensioactif non ionique, d'au moins un composé hydrosoluble ou hydrodispersable,
- on sèche l'émulsion ainsi obtenue ;
et **caractérisés en ce que** :
- la matière active est sous forme de liquide hydrophobe,
- le tensioactif non ionique est choisi parmi les dérivés polyoxyalkylénés,
- le composé hydrosoluble ou hydrodispersable est :
(i) au moins un polymère obtenu par polymérisation d'au moins un monomère (I), d'au moins un monomère (III) et éventuellement d'au moins un monomère (II) ou d'au moins un monomère (I) et d'au moins un monomère (II') ; lesdits monomères correspondants aux suivants :
∘ (I) : acide monocarboxylique ou polycarboxylique, ou anhydride, aliphatique, cyclique ou aromatique, linéaire ou ramifié, éthyléniquement insaturé,
∘ (II) : monomère hydrocarboné, linéaire ou ramifié, éthyléniquement insaturé ;
∘ (II') : monomère choisi parmi le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène, le 2-méthyl 3,3-diméthyl 1-pentène ;
∘ (III) : ester polyoxyalkyléné d'acide carboxylique éthyléniquement insaturé ;
(ii) au moins un polymère issu de la polymérisation d'au moins un monomère (I) acide monocarboxylique ou polycarboxylique, ou anhydride, aliphatique, cyclique ou aromatique, linéaire ou ramifié, éthyléniquement insaturé, et comprenant en outre au moins un greffon hydrophobe, hydrocarboné, en C₄-C₃₀, saturé ou non, aromatique ou non, éventuellement interrompu par un ou plusieurs hétéroatomes ;
(iii) les polypeptides d'origine naturelle ou synthétique, comportant au moins un greffon hydrophobe, hydrocarboné, en C₄-C₃₀, saturé ou non, aromatique ou non, éventuellement interrompu par un ou plusieurs hétéroatomes ;
(iv) les polysaccharides fortement dépolymérisés comportant au moins un greffon hydrophobe, hydrocarboné, en C₄-C₃₀, saturé ou non, aromatique ou non, éventuellement interrompu par un ou plusieurs hétéroatomes.

2. Granulés selon la revendication précédente, **caractérisés en ce que** le polymère (i) est issu de la polymérisation :
∘ d'au moins un monomère de formule (I):
(R¹)(R¹) - C = C(R¹) - COOH (I)
formule dans laquelle les radicaux R¹, identiques ou différents, représentent un atome d'hydrogène, un radical hydrocarboné en C₁ - C₁₀ comprenant éventuellement un groupement - COOH, un groupement - COOH ; et
∘ d'au moins un monomère de formule (III) :
CH₂=C(R³)-C(O)-O-[CH₂CH(R⁴)O]ₘ-[CH(R⁵)-CH₂O]ₙ - R⁶
formule dans laquelle :
R³ est un atome d'hydrogène ou un radical méthyle,
R⁴ et R⁵ identiques ou différents, représentent un atome d'hydrogène ou un radical alkyle contenant de 1 à 4 atomes de carbone,
R⁶ est un radical alkyle, aryle, alkylaryle ou arylalkyle contenant de 1 à 30, de préférence de 8 à 30 atomes de carbone,
n est compris entre 2 et 100, de préférence entre 6 et 100 et m est compris entre 0 et 50, sous réserve que n soit supérieur ou égal à m et leur somme comprise entre 2 et 100, de préférence entre 6 et 100.
et éventuellement :
∘ d'au moins un monomère de formule (II) :
(R²)(R²) - C = CH₂ (II)
formule dans laquelle les radicaux R², identiques ou différents, représentent un atome d'hydrogène, un radical aliphatique linéaire ou ramifié, ou cyclique, en C₁ - C₁₀.

3. Granulés selon la revendication 1, **caractérisés en ce que** le polymère (i) est issu de la polymérisation :
∘ d'au moins un monomère de formule (I):
(R¹)(R¹) - C = C(R¹) - COOH (I)
formule dans laquelle les radicaux R¹, identiques ou différents, représentent un atome d'hydrogène, un radical hydrocarboné en C₁ - C₁₀ comprenant éventuellement un groupement - COOH, un groupement - COOH ; et
∘ d'au moins un monomère de formule (II').

4. Granulés selon l'une quelconque des revendications 1 à 3, **caractérisés en ce que** le monomère (I) du polymère (i) ou (ii) est un acide monocarboxylique ou polycarboxylique, ou un anhydride carboxylique, correspondant à la formule suivante :
(R¹¹)HC = C (R¹²)COOH
formule dans laquelle :
R¹¹ représente un atome d'hydrogène, un groupement -COOH ou un groupement - (CH₂)ₙ - COOH dans lequel n est compris entre 1 et 4, un radical alkyle en C₁-C₄ ; R¹² représente un atome d'hydrogène, un groupement -(CH₂)ₘ - COOH dans lequel m est compris entre 1 et 4, un radical alkyle en C₁-C₄.

5. Granulés selon la revendication précédente, **caractérisés en ce que** le monomère (I) du polymère (i) ou (ii) est tel que le radical R¹¹ représente un atome d'hydrogène, un groupement -COOH ou -(CH₂)-COOH, un radical méthyle, et le radical R¹² représente un atome d'hydrogène, un groupement -CH₂ -COOH ou un radical méthyle.

6. Granulés selon l'une quelconque des revendications 4 à 5, **caractérisés en ce que** le monomère (I) du polymère (i) ou (ii) est choisi parmi les acides ou anhydrides acrylique, méthacrylique, citraconique, maléique, fumarique, itaconique, crotonique.

7. Granulés selon l'une quelconque des revendications précédentes, **caractérisés en ce que** le monomère (II) est choisi parmi l'éthylène, le propylène, le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène, le 2-méthyl 3,3-diméthyl 1-pentène.

8. Granulés selon l'une quelconque des revendications précédentes, **caractérisés en ce que** le monomère (III) est tel que R⁶ est un radical alkyle contenant de 8 à 30 atomes de carbone, un radical phényle substitué par un à trois groupements 1-phényléthyle, un radical alkylphényle dont le radical alkyle contient de 8 à 16 atomes de carbone.

9. Granulés selon l'une quelconque des revendications précédentes, **caractérisés en ce que** le polymère (i) ou (ii) peut comprendre en outre un ou plusieurs motifs correspondant à des monomères non-ioniques monoéthyléniquement insaturés (IV) autres que les monomères (II) ou (II').

10. Granulés selon la revendication précédente, **caractérisés en ce que** le monomère (IV) est choisi parmi :
∘ les monomères vinylaromatiques comme le styrène, le vinyltoluène,
∘ les C₁-C₂₀ alkylesters d'acides α-β éthyléniquement insaturés comme les acrylates ou méthacrylates de méthyle, éthyle, butyle,
∘ les esters de vinyle ou d'allyle d'acides α-β éthyléniquement insaturés comme les acétates ou propionates de vinyle ou d'allyle,
∘ les halogénures de vinyle ou de vinylidène comme le chlorure de vinyle ou de vinylidène,
∘ les nitriles α-β éthyléniquement insaturés comme l'acrylonitrile,
∘ les hydroxyalkylesters d'acides α-β éthyléniquement insaturés comme les acrylates ou méthacrylates d'hydroxyéthyle ou d'hydroxypropyle,
∘ les amides α-β éthyléniquement insaturés comme l'acrylamide, le méthacrylamide.

11. Granulés selon l'une quelconque des revendications précédentes, **caractérisés en ce que** le greffon est choisi parmi les radicaux aliphatiques, cycliques, aromatiques, alkylaromatiques, arylaliphatiques, comprenant 4 à 30 atomes de carbone et pouvant être interrompus par un ou plusieurs hétéroatomes, de préférence l'oxygène.

12. Granulés selon l'une quelconque des revendications précédentes, **caractérisés en ce que** le polymère (i) est issu de la polymérisation de l'anhydride maléique et du diisobutylène.

13. Granulés selon l'une quelconque des revendications précédentes, **caractérisés en ce que** les polypeptides (iii) sont choisis parmi les homopolymères et copolymères dérivés au moins de l'acide aspartique, glutamique.

14. Granulés selon l'une quelconque des revendications précédentes, **caractérisés en ce que** les polysaccharides (iv) sont choisis parmi les composés fortement dépolymérisés obtenus à partir de dextran, d'amidon, de maltodextrine, de gomme xanthane, et de galactomannanes, tels que le guar ou la caroube.

15. Granulés selon l'une quelconque des revendications précédentes, **caractérisés en ce que** le tensioactif non ionique est choisi parmi :
- les alcools gras éthoxylés ou éthoxy-propoxylés
- les triglycérides éthoxylés ou éthoxy-propoxylés
- les acides gras éthoxylés ou éthoxy-propoxylés
- les esters de sorbitan éthoxylés ou éthoxy-propoxylés
- les amines grasses éthoxylées ou éthoxy-propoxylées
- les di(phényl-1 éthyl) phénols éthoxylés ou éthoxy-propoxylés
- les tri(phényl-1 éthyl) phénols éthoxylés ou éthoxy-propoxylés
- les alkyls phénols éthoxylés ou éthoxy-propoxylés.

16. Granulés selon l'une quelconque des revendications précédentes, **caractérisés en ce qu'**ils peuvent comprendre en outre au moins un tensioactif supplémentaire ionique.

17. Granulés selon l'une quelconque des revendications précédentes, **caractérisés en ce que** la teneur en matière active est comprise entre 40 et 90 parties en poids dans le granulé.

18. Granulés selon l'une quelconque des revendications précédentes, **caractérisés en ce que** la quantité de tensioactif non ionique et de composé hydrosoluble ou hydrodispersable, varie entre 10 et 60 parties en poids dans le granulé.

19. Granulés selon l'une quelconque des revendications précédentes, **caractérisés en ce que** le rapport pondéral des concentrations entre le tensioactif non ionique et le composé hydrosoluble ou hydrodispersable est compris entre 50 / 50 et 90 / 10.

20. Granulés selon l'une quelconque des revendications précédentes, **caractérisés en ce que** le rapport pondéral des concentrations entre le tensioactif non ionique et le ou les tensioactifs supplémentaires est compris entre 5 et 10.

21. Granulés selon l'une quelconque des revendications précédentes, **caractérisés en ce que** l'on prépare une émulsion comprenant 10 à 99 % en poids de matières sèches, de préférence 30 à 80 % en poids.

22. Granulés selon l'une quelconque des revendications précédentes, **caractérisés en ce que** l'on effectue un séchage en étuve, en couche mince.

23. Granulés selon l'une quelconque des revendications 1 à 21, **caractérisés en ce que** l'on effectue un séchage par atomisation.

24. Granulés selon l'une quelconque des revendications précédentes, **caractérisés en ce que** la matière active est choisie parmi les matières actives utilisables dans les domaines de l'alimentaire, de la détergence, de la cosmétique, des peintures, du papier, de l'agrochimie, du travail ou de la déformation des métaux.

25. Granulés selon l'une quelconque des revendications précédentes, **caractérisés en ce que** la matière active est une huile silicone, une huile organique d'origine animale, végétale ou minérale ou un dérivé de ces huiles.

## Patentansprüche

1. In Wasser re-dispergierbare Granulate, **dadurch gekennzeichnet, dass** sie durch Ausführen der folgenden Schritte erhalten werden können:
- Herstellen einer Emulsion in Wasser von mindestens einem aktiven Stoff, mindestens einem nicht-ionischen Tensid, mindestens einer wasserlöslichen oder wasserdispergierbaren Verbindung,
- Trocknen der so erhaltenen Emulsion;
und **dadurch gekennzeichnet, dass**
- der aktive Stoff in Form einer hydrophoben Flüssigkeit vorliegt,
- das nicht-ionische Tensid aus Polyoxyalkylen-Derivaten ausgewählt ist,
- die wasserlösliche oder wasserdispergierbare Verbindung folgendes darstellt:
(i) mindestens ein Polymer, erhalten durch Polymerisation von mindestens einem Monomer (I), mindestens einem Monomer (III) und gegebenenfalls mindestens einem Monomer (II) oder mindestens einem Monomer (I) und mindestens einem Monomer (II'); wobei diese Monomeren den folgenden entsprechen:
(I): aliphatische, cyclische oder aromatische, lineare oder verzweigte, ethylenisch ungesättigte Monocarbonsäure oder Polycarbonsäure oder Anhydrid,
(II): lineares oder verzweigtes, ethylenisch ungesättigtes Kohlenwasserstoff-Monomer,
(II'): Monomer, ausgewählt aus 1-Buten, Isobutylen, n-1-Penten, 2-Methyl-1buten, n-1-Hexen, 2-Methyl-1-penten, 4-Methyl-1-penten, 2-Ethyl-1buten, Diisobutylen, 2-Methyl-3,3-dimethyl-1-penten,
(III): Polyoxyalkylenester einer ethylenisch ungesättigten Carbonsäure;
(ii) mindestens ein Polymer, das aus der Polymerisation von mindestens einem aliphatischen, cyclischen oder aromatischen, linearen oder verzweigten, ethylenisch ungesättigten Carbonsäure- oder Polycarbonsäure- oder Anhydrid-Monomer (I) stammt, und das zusätzlich mindestens einen hydrophoben Kohlenwasserstoff-Pfropf mit C₄-C₃₀, gesättigt oder nicht, aromatisch oder nicht, gegebenenfalls durch ein oder mehrere Heteroatome unterbrochen, umfasst;
(iii) Polypeptide natürlichen oder synthetischen Ursprungs, die mindestens einen Kohlenwasserstoff-Pfropf mit C₄-C₃₀, gesättigt oder nicht, aromatisch oder nicht, gegebenenfalls durch ein oder mehrere Heteroatome unterbrochen, umfassen;
(iv) stark depolymerisierte Polysaccharide, die mindestens einen hydrophoben Kohlenwasserstoff-Pfropf mit C₄-C₃₀, gesättigt oder nicht, aromatisch oder nicht, gegebenenfalls durch ein oder mehrere Heteroatome unterbrochen, umfassen.

2. Granulate gemäß dem vorhergehenden Anspruch, **dadurch gekennzeichnet, dass** das Polymer (i) aus der Polymerisation
- von mindestens einem Monomer der Formel (I):
(R¹)(R¹)-C=C(R¹)-COOH (I)
worin die Reste R¹, die gleich oder voneinander verschieden sind, für ein Wasserstoffatom, einen Kohlenwasserstoffrest mit C₁-C₁₀, gegebenenfalls eine Gruppe -COOH umfassend, oder eine Gruppe -COOH stehen, und
- von mindestens einem Monomer der Formel (III):
CH₂=C(R³)-C(O)-O-[CH₂CH(R⁴)O]ₘ-[CH(R⁵)-CH₂O]ₙ-R⁶
worin
R³ für ein Wasserstoffatom oder einen Methylrest steht,
R⁴ und R⁵, die gleich oder voneinander verschieden sind, für ein Wasserstoffatom oder einen Alkylrest mit 1 bis 4 Kohlenstoffatomen stehen,
R⁶ für einen Alkyl-, Aryl-, Alkylaryl- oder Arylalkylrest mit 1 bis 30 Kohlenstoffatomen steht, vorzugsweise mit 8 bis 30 Kohlenstoffatomen,
n zwischen 2 und 100 liegt, vorzugsweise zwischen 6 und 100 und m zwischen 0 und 50 liegt, mit der Maßgabe, dass n größer oder gleich m ist und dass ihre Summe zwischen 2 und 100 liegt, vorzugsweise zwischen 6 und 100,
und gegebenenfalls
von mindestens einem Monomer der Formel (II):
(R²)(R²)-C=CH₂ (II)
worin die Reste R², die gleich oder voneinander verschieden sind, für ein Wasserstoffatom oder einen linearen oder verzweigten aliphatischen oder cyclischen Rest mit C₁-C₁₀ stehen,
stammt.

3. Granulate gemäß Anspruch 1, **dadurch gekennzeichnet, dass** das Polymer (I) aus der Polymerisation:
- von mindestens einem Monomer der Formel (I):
(R¹)(R¹)-C=C(R¹)-COOH (I)
worin die Reste R¹, die gleich oder voneinander verschieden sind, für ein Wasserstoffatom, einen Kohlenwasserstoffrest mit C₁-C₁₀, der gegebenenfalls eine Gruppe -COOH umfasst, oder eine Gruppe -COOH stehen, und
- von mindestens einem Monomer der Formel (II')
stammt.

4. Granulate gemäß einem der Ansprüche 1 bis 3, **dadurch gekennzeichnet, dass** das Monomer (I) des Polymeren (i) oder (ii) eine Monocarbonsäure oder eine Polycarbonsäure oder ein Carbonsäureanhydrid ist, das der folgenden Formel entspricht:
(R¹¹)HC=C(R¹²)COOH
worin
R¹¹ für ein Wasserstoffatom, eine Gruppe -COOH oder eine Gruppe -(CH₂)ₙ-COOH, worin n zwischen 1 und 4 liegt, oder einen Alkylrest mit C₁-C₄ steht; R¹² für ein Wasserstoffatom, eine Gruppe -(CH₂)ₘ-COOH, worin m zwischen 1 und 4 liegt, oder einen Alkylrest mit C₁-C₄ steht.

5. Granulate gemäß dem vorhergehenden Anspruch, **dadurch gekennzeichnet, dass** das Monomer (I) des Polymers (i) oder (ii) derart ist, dass der Rest R¹¹ für ein Wasserstoffatom, eine Gruppe -COOH oder (CH₂)-COOH oder einen Methylrest steht, und dass der Rest R¹² für ein Wasserstoffatom, eine Gruppe -CH₂-COOH oder einen Methylrest steht.

6. Granulate gemäß einem der Ansprüche 4 bis 5, **dadurch gekennzeichnet, dass** das Monomer (I) des Polymers (i) oder (ii) ausgewählt ist aus Acrylsäure, Methacrylsäure, Citraconsäure, Maleinsäure, Fumarsäure, Itaconsäure, Crotonsäure oder deren Anhydride.

7. Granulate gemäß einem der vorhergehenden Ansprüche, **dadurch gekennzeichnet, dass** das Monomer (II) ausgewählt ist aus Ethylen, Propylen, 1-Buten, Isobutylen, n-1-Penten, 2-Methyl-1-buten, n-1-Hexen, 2-Methyl-1-penten, 4-Methyl-1penten, 2-Ethyl-1-buten, Diisobutylen, 2-Methyl-3,3-dimethyl-1-penten.

8. Granulate gemäß einem der vorhergehenden Ansprüche, **dadurch gekennzeichnet, dass** das Monomer (III) derart ist, dass R⁶ für einen Alkylrest, der 8 bis 30 Kohlenstoffatome enthält, einen Phenylrest, der mit ein bis drei 1-Phenylethylgruppen substituiert ist, oder einen Alkylphenylrest, dessen Alkylrest 8 bis 16 Kohlenstoffatome enthält, steht.

9. Granulate gemäß einem der vorhergehenden Ansprüche, **dadurch gekennzeichnet, dass** das Polymer (i) oder (ii) zusätzlich ein oder mehrere Gruppierungen umfassen kann, die nicht-ionischen monoethylenisch ungesättigten Monomeren (IV) entsprechen, die von den Monomeren (II) oder (II') verschieden sind.

10. Granulate gemäß dem vorhergehenden Anspruch, **dadurch gekennzeichnet, dass** das Monomer (IV) ausgewählt ist aus:
- vinylaromatischen Monomeren wie Styrol, Vinyltoluol,
- C₁-C₂₀-Alkylestern von α-β-ethylenisch ungesättigten Säuren wie Methylacrylat, Methylmethacrylat, Ethylacrylat, Ethylmethacrylat, Butylacrylat oder Butylmethacrylat,
- Vinyl- oder Allylester von α-β-ethylenisch ungesättigten Säuren wie Vinylacetat, Allylacetat, Vinylpropionat oder Allylpropionat,
- Halogenide von Vinyl oder Vinyliden wie Vinylchlorid oder Vinylidenchlorid,
- α-β-ethylenisch ungesättigte Nitrile wie Acrylnitril,
- Hydroalkylester von α-β-ethylenisch ungesättigten Säuren wie Hydroxyethylacrylat, Hydroxyethylmethacrylat, Hydroxypropylacrylat oder Hydroxypropylmethacrylat,
- α-β-ethylenisch ungesättigte Amide wie Acrylamid, Methacrylamid.

11. Granulate gemäß einem der vorhergehenden Ansprüche, **dadurch gekennzeichnet, dass** der Pfropf aus aliphatischen, cyclischen, aromatischen, alkylaromatischen, arylaliphatischen Resten ausgewählt ist, die 4 bis 30 Kohlenstoffatome umfassen und durch ein oder mehrere Heteroatome, vorzugsweise Sauerstoff, unterbrochen sein können.

12. Granulate gemäß einem der vorhergehenden Ansprüche, **dadurch gekennzeichnet, dass** das Polymer (i) aus der Polymerisation von Maleinsäureanhydrid und Diisobutylen stammt.

13. Granulate gemäß einem der vorhergehenden Ansprüche, **dadurch gekennzeichnet, dass** die Polypeptide (iii) aus Homopolymeren und Copolymeren ausgewählt sind, die von mindestens Asparaginsäure, Glutaminsäure abgeleitet sind.

14. Granulate gemäß einem der vorhergehenden Ansprüche, **dadurch gekennzeichnet, dass** die Polysaccharide (iv) aus stark depolymerisierten Verbindungen ausgewählt sind, die ausgehend von Dextran, Amidon, Maltodextrin, Xanthangummi und Galactomannanen, wie Guar oder Johannisbrot, erhalten werden.

15. Granulate gemäß einem der vorhergehenden Ansprüche, **dadurch gekennzeichnet, dass** das nicht-ionische Tensid ausgewählt ist aus:
- ethoxylierten oder ethoxy-propoxylierten Fettalkoholen
- ethoxylierten oder ethoxy-propoxylierten Triglyceriden
- ethoxylierten oder ethoxy-propoxylierten Fettsäuren
- ethoxylierten oder ethoxy-propoxylierten Sorbitanestern
- ethoxylierten oder ethoxy-propoxylierten Fettaminen
- ethoxylierten oder ethoxy-propoxylierten Di(phenyl-1-ethyl)-phenolen
- ethoxylierten oder ethoxy-propoxylierten Tri(phenyl-1-ethyl)-phenolen
- ethoxylierten oder ethoxy-propoxylierten Alkylphenolen.

16. Granulate gemäß einem der vorhergehenden Ansprüche, **dadurch gekennzeichnet, dass** sie ferner mindestens ein zusätzliches ionisches Tensid umfassen.

17. Granulate gemäß einem der vorhergehenden Ansprüche, **dadurch gekennzeichnet, dass** der Gehalt an aktivem Stoff zwischen 40 und 90 Gew.-Teilen in dem Granulat liegt.

18. Granulate gemäß einem der vorhergehenden Ansprüche, **dadurch gekennzeichnet, dass** die Menge an nicht-ionischem Tensid und an der wasserlöslichen oder wasserdispergierbaren Verbindung im Granulat zwischen 10 und 60 Gew.-Teilen liegt.

19. Granulate gemäß einem der vorhergehenden Ansprüche, **dadurch gekennzeichnet, dass** das Gewichtsverhältnis der Konzentrationen zwischen dem nicht-ionischen Tensid und der wasserlöslichen oder wasserdispergierbaren Verbindung zwischen 50/50 und 90/10 liegt.

20. Granulate gemäß einem der vorhergehenden Ansprüche, **dadurch gekennzeichnet, dass** das Gewichtsverhältnis der Konzentrationen zwischen dem nicht-ionischen Tensid und dem oder den zusätzlichen Tensiden zwischen 5 und 10 liegt.

21. Granulate gemäß einem der vorhergehenden Ansprüche, **dadurch gekennzeichnet, dass** eine Emulsion hergestellt wird, die 10 bis 99 Gew.-% Trockensubstanzen, vorzugsweise 30 bis 80 Gew.-%, enthält.

22. Granulate gemäß einem der vorhergehenden Ansprüche, **dadurch gekennzeichnet, dass** eine Trocknung im Trockenofen, eine Dünnfilmtrocknung, durchgeführt wird.

23. Granulate gemäß einem der Ansprüche 1 bis 21, **dadurch gekennzeichnet, dass** eine Sprühtrocknung durchgeführt wird.

24. Granulate gemäß einem der vorhergehenden Ansprüche, **dadurch gekennzeichnet, dass** der aktive Stoff ausgewählt ist aus aktiven Stoffen, die in den Bereichen der Nahrungsmittel, Detergentien, Kosmetik, Anstriche, Papier, Agrochemie, Metallverarbeitung oder Metallverformung verwendbar sind.

25. Granulate gemäß einem der vorhergehenden Ansprüche, **dadurch gekennzeichnet, dass** der aktive Stoff ein Silikonöl, ein organisches Öl tierischen, pflanzlichen oder mineralischen Ursprungs oder ein Derivat dieser Öle ist.

## Claims

1. Water-redispersible granules **characterized in that** they can be obtained by carrying out the following steps:
- an emulsion, in water, of at least one active substance, at least one nonionic surfactant, and at least one water-soluble or water-dispersible compound is prepared,
- the emulsion thus obtained is dried;
and **characterized in that**:
- the active substance is in the form of a hydrophobic liquid,
- the nonionic surfactant is chosen from polyoxyalkylenated derivatives,
- the water-soluble or water-dispersible compound is:
(i) at least one polymer obtained by polymerizing at least one monomer (I), at least one monomer (III) and optionally at least one monomer (II) or at least one monomer (I) and at least one monomer (II'), the said monomers corresponding to the following:
ο (I) : ethylenically unsaturated, linear or branched, aliphatic, cyclic or aromatic monocarboxylic or polycarboxylic acid, or anhydride,
ο (II) : ethylenically unsaturated, linear or branched hydrocarbon monomer;
ο (II') : monomer chosen from 1-butene, isobutylene, n-1-pentene, 2-methyl-1-butene, n-1-hexene, 2-methyl-1-pentene, 4-methyl-1-pentene, 2-ethyl-1-butene, diisobutylene, 2-methyl-3,3-dimethyl-1-pentene;
ο (III): polyoxyalkylenated ester of an ethylenically unsaturated carboxylic acid;
(ii) at least one polymer derived from the polymerization of at least one ethylenically unsaturated, linear or branched, aliphatic, cyclic or aromatic, monocarboxylic or polycarboxylic acid, or anhydride, monomer (I) and comprising, in addition, at least one saturated or unsaturated, aromatic or nonaromatic, hydrophobic C₄-C₃₀ hydrocarbon graft, optionally interrupted by one or more heteroatoms;
(iii) the polypeptides of natural or synthetic origin, comprising at least one saturated or unsaturated, aromatic or nonaromatic, hydrophobic C₄-C₃₀ hydrocarbon graft, optionally interrupted by one or more heteroatoms;
(iv) the highly depolymerized polysaccharides comprising at least one saturated or unsaturated, aromatic or nonaromatic, hydrophobic C₄-C₃₀ hydrocarbon graft, optionally interrupted by one or more heteroatoms.

2. Granules according to the preceding claim, **characterized in that** the polymer (i) is derived from the polymerization:
ο of at least one monomer of formula (I):
(R¹)(R¹)-C=C(R¹)-COOH (I)
in which formula the radicals R¹, which are identical or different, represent a hydrogen atom, a C₁-C₁₀ hydrocarbon radical optionally comprising a -COOH group, a -COOH group; and
ο of at least one monomer of formula (III):
CH₂=C(R³)-C(O)-O-[CH₂CH(R⁴)O]ₘ-[CH(R⁵)-CH₂O]ₙ-R⁶
in which formula:
R³ is a hydrogen atom or a methyl radical,
R⁴ and R⁵, which are identical or different, represent a hydrogen atom or an alkyl radical containing from 1 to 4 carbon atoms,
R⁶ is an alkyl, aryl, alkylaryl or arylalkyl radical containing from 1 to 30, preferably from 8 to 30 carbon atoms,
n is between 2 and 100, preferably between 6 and 100 and m is between 0 and 50, with the proviso that n is greater than or equal to m and their sum is between 2 and 100, preferably between 6 and 100;
and optionally:
ο of at least one monomer of formula (II):
(R²) (R²)-C=CH₂ (II)
in which formula the radicals R², which are identical or different, represent a hydrogen atom, a linear or branched aliphatic, or cyclic, C₁-C₁₀ radical.

3. Granules according to claim 1, **characterized in that** the polymer (i) is derived from the polymerization:
ο of at least one monomer of formula (I):
(R¹)(R¹)-C=C(R¹)-COOH (I)
in which formula the radicals R¹, which are identical or different, represent a hydrogen atom, a C₁-C₁₀ hydrocarbon radical optionally comprising a -COOH group, a -COOH group; and
ο of at least one monomer of formula (II').

4. Granules according to any one of claims 1 to 3, **characterized in that** the monomer (I) of the polymer (i) or (ii) is a monocarboxylic or polycarboxylic acid, or a carboxylic anhydride, corresponding to the following formula:
(R¹¹)HC=C(R¹²)COOH
in which formula:
R¹¹ represents a hydrogen atom, a -COOH group or a group -(CH₂)ₙ-COOH in which n is between 1 and 4, a C₁-C₄ alkyl radical; R¹² represents a hydrogen atom, a group -(CH₂)ₘ-COOH in which m is between 1 and 4, a C₁-C₄ alkyl radical.

5. Granules according to the preceding claim, **characterized in that** the monomer (I) of the polymer (i) or (ii) is such that the radical R¹¹ represents a hydrogen atom, a group -COOH or -(CH₂)-COOH, a methyl radical, and the radical R¹² represents a hydrogen atom, a group -CH₂-COOH or a methyl radical.

6. Granules according to any one of claims 4 to 5, **characterized in that** the monomer (I) of the polymer (i) or (ii) is chosen from acrylic, methacrylic, citraconic, maleic, fumaric, itaconic or crotonic acids or anhydrides.

7. Granules according to any one of the preceding claims, **characterized in that** the monomer (II) is chosen from ethylene, propylene, 1-butene, isobutylene, n-1-pentene, 2-methyl-1-butene, n-1-hexene, 2-methyl-1-pentene, 4-methyl-1-pentene, 2-ethyl-1-butene, diisobutylene, 2-methyl-3,3-dimethyl-1-pentene.

8. Granules according to any one of the preceding claims, **characterized in that** the monomer (III) is such that R⁶ is an alkyl radical containing from 8 to 30 carbon atoms, a phenyl radical substituted with one to three 1-phenylethyl groups, or an alkylphenyl radical in which the alkyl radical contains from 8 to 16 carbon atoms.

9. Granules according to any one of the preceding claims, **characterized in that** the polymer (i) or (ii) may comprise, in addition, one or more units corresponding to monoethylenically unsaturated nonionic monomers (IV) other than the monomers (II) or (II').

10. Granules according to the preceding claim, **characterized in that** the monomer (IV) is chosen from:
ο vinylaromatic monomers such as styrene, vinyltoluene,
ο C₁-C₂₀ alkyl esters of acids which are α-β-ethylenically unsaturated, such as methyl, ethyl or butyl acrylates or methacrylates,
ο vinyl or allyl esters of acids which are α-β-ethylenically unsaturated, such as vinyl or allyl acetates or propionates,
ο vinyl or vinylidene halides such as vinyl or vinylidene chloride,
ο α-β-ethylenically unsaturated nitriles such as acrylonitrile,
ο hydroxyalkyl esters of acids which are α-β-ethylenically unsaturated, such as hydroxyethyl or hydroxypropyl acrylates or methacrylates,
ο α-β-ethylenically unsaturated amides such as acrylamide or methacrylamide.

11. Granules according to any one of the preceding claims, **characterized in that** the graft is chosen from aliphatic, cyclic, aromatic, alkylaromatic and arylaliphatic radicals comprising 4 to 30 carbon atoms and which may be interrupted by one or more heteroatoms, preferably oxygen.

12. Granules according to any one of the preceding claims, **characterized in that** the polymer (i) is derived from the polymerization of maleic anhydride and diisobutylene.

13. Granules according to any one of the preceding claims, **characterized in that** the polypeptides (iii) are chosen from homopolymers and copolymers derived at least from aspartic and glutamic acids.

14. Granules according to any one of the preceding claims, **characterized in that** the polysaccharides (iv) are chosen from the highly depolymerized compounds obtained from dextran, starch, maltodextrin, xanthan gum and galactomannans, such as guar or carob.

15. Granules according to any one of the preceding claims, **characterized in that** the nonionic surfactant is chosen from:
- ethoxylated or ethoxy-propoxylated fatty alcohols
- ethoxylated or ethoxy-propoxylated triglycerides
- ethoxylated or ethoxy-propoxylated fatty acids
- ethoxylated or ethoxy-propoxylated sorbitan esters
- ethoxylated or ethoxy-propoxylated fatty amines
- ethoxylated or ethoxy-propoxylated di(1-phenylethyl)phenols
- ethoxylated or ethoxy-propoxylated tri(1-phenylethyl)phenols
- ethoxylated or ethoxy-propoxylated alkylphenols.

16. Granules according to any one of the preceding claims, **characterized in that** they may comprise, in addition, at least one additional ionic surfactant.

17. Granules according to any one of the preceding claims, **characterized in that** the content of active substance is between 40 and 90 parts by weight in the granule.

18. Granules according to any one of the preceding claims, **characterized in that** the quantity of nonionic surfactant and of water-soluble or water-dispersible compound varies between 10 and 60 parts by weight in the granule.

19. Granules according to any one of the preceding claims, **characterized in that** the weight ratio of the concentrations between the nonionic surfactant and the water-soluble or water-dispersible compound is between 50/50 and 90/10.

20. Granules according to any one of the preceding claims, **characterized in that** the weight ratio of the concentrations between the nonionic surfactant and the additional surfactant(s) is between 5 and 10.

21. Granules according to any one of the preceding claims, **characterized in that** an emulsion is prepared which comprises 10 to 99% by weight of dry substances, preferably 30 to 80% by weight.

22. Granules according to any one of the preceding claims, **characterized in that** drying is carried out in an oven, in a thin layer.

23. Granules according to any one of claims 1 to 21, **characterized in that** the drying is carried out by spray-drying.

24. Granules according to any one of the preceding claims, **characterized in that** the active substance is chosen from active substances which can be used in the food, detergency, cosmetics, paints, paper, agrochemical and metal-working or -deforming sectors.

25. Granules according to any one of the preceding claims, **characterized in that** the active substance is a silicone oil, an organic oil of animal, plant or mineral origin or a derivative of these oils.
